(19) Europäisches Patentamt
European Patent Office
Office européen des brevets

(11) **EP 4 701 221 A1**

(12) **EUROPEAN PATENT APPLICATION**
published in accordance with Art. 153(4) EPC

(43) Date of publication:
**25.02.2026  Bulletin 2026/09**

(21) Application number: **24810471.3**

(22) Date of filing: **23.05.2024**

(51) International Patent Classification (IPC):
***H04Q 11/00*** (2006.01)

(52) Cooperative Patent Classification (CPC):
**H04Q 11/00**

(86) International application number:
**PCT/CN2024/095009**

(87) International publication number:
**WO 2024/240234 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **23.05.2023  CN 202310595912**

(71) Applicant: **ZTE CORPORATION
Shenzhen, Guangdong 518057 (CN)**

(72) Inventors:
• **YANG, Bo**
  **Shenzhen, Guangdong 518057 (CN)**
• **ZHONG, Yiming**
  **Shenzhen, Guangdong 518057 (CN)**
• **LI, Mingsheng**
  **Shenzhen, Guangdong 518057 (CN)**
• **HUANG, Xingang**
  **Shenzhen, Guangdong 518057 (CN)**

(74) Representative: **Chimini, Francesco et al
Jacobacci & Partners S.p.A.
Piazza della Vittoria 11
25122 Brescia (IT)**

(54) **IDENTIFICATION METHOD FOR BRANCH PORTS OF OPTICAL DISTRIBUTION NETWORK, AND OPTICAL DISTRIBUTION NETWORK**

(57) Embodiments of the present invention provide an identification method for branch ports of an optical distribution network (ODN), and an ODN. The method includes: splitting a first uplink optical signal transmitted by an optical network unit (ONU) connected to a branch port of an ODN, to obtain a plurality of second uplink optical signals; and superimposing the second uplink optical signals having undergone signal delay and corresponding to the same branch port of the ODN, to obtain a superimposed uplink optical signal corresponding to the branch port of the ODN, thereby identifying different branch ports of the ODN according to signal changes corresponding to the superimposed uplink optical signals.

A first uplink optical signal transmitted by an optical network unit (ONU) connected to a branch port of an ODN is split, to obtain a plurality of second uplink optical signals — S202

The second uplink optical signals having undergone signal delay and corresponding to the same branch port of the ODN are superimposed, to obtain a superimposed uplink optical signal corresponding to the branch port of the ODN, thereby identifying different branch ports of the ODN according to signal changes corresponding to the superimposed uplink optical signals — S204

Fig. 2

## Description

### Cross-Reference to Related Application

The invention is based on Chinese Patent Application CN202310595912.7, filed on May 23, 2023 and entitled "Identification Method for Branch Ports of Optical Distribution Network, and optical distribution network", and claims the priority to the invention, which is incorporated in its entirety herein by reference.

### Technical Field

Embodiments of the present invention relate to the field of communications, and in particular, to an identification method for branch ports of an optical distribution network, and an optical distribution network.

### Background

A passive optical network (PON) provides a connection between an optical line terminal (OLT) and a plurality of optical network units (ONU), shares an optical fiber medium between the OLT and an optical splitter, and has advantages such as being passive, low cost, convenient maintenance, and being transparent to various services. Accordingly, PON technology has become the mainstream technology for broadband access in the era of full-service operations, and it has now entered the stage of large-scale deployment of 10 Gigabit Passive Optical Network (10G PON).

In PON network, the Optical Distribution Network (ODN) uses one or multiple stages of optical splitters, with a splitting ratio typically reaching 1:32 or higher. After being put into operation and maintenance, service providers gradually connect ONUs to activate services. As the optical splitter and the optical fiber in the ODN are pure passive optical components and cannot transmit the marking information, the system operation and maintenance layer cannot directly obtain the connection topology relationship between the branch port in the ODN and the ONU or the utilization ratio of the branch fiber in the ODN. Instead, it is necessary to attach additional radio frequency tags to the branch ports or branch fibers, or have maintenance personnel manually record the correlation between the branch port and the ONU. This significantly increases the operation and maintenance costs for large-scale PON networks.

In related technologies, additional detection optical signals are usually added at the OLT or ONU. The splitters or branch fibers in the ODN network are modified to identify the correlation between a branch port and the ONU on the basis of reflection signals of different optical wavelengths or optical pulse sequences. This requires adding optical transmitters and receivers to the OLT and ONU devices or optical modules, which not only increases the cost of equipment at both ends but also makes it incompatible with a large number of existing ONU devices.

### Summary

Embodiments of the present invention provide an identification method for branch ports of an optical distribution network, and an optical distribution network, so as to at least solve the problem in the related art that the connection relationship between the branch ports of the splitter in the ODN and the ONUs is unclear, making it impossible to determine the topological connection relationship of the ODN network.

According to one embodiment of the present invention, provided is an identification method for branch ports of an optical distribution network (ODN), including: splitting a first uplink optical signal transmitted by an optical network unit (ONU) connected to a branch port of an ODN, to obtain a plurality of second uplink optical signals; and superimposing the second uplink optical signals having undergone signal delay and corresponding to the same branch port of the ODN, to obtain a superimposed uplink optical signal corresponding to the branch port of the ODN, thereby identifying different branch ports of the ODN according to signal changes corresponding to the superimposed uplink optical signals.

According to another embodiment of the present invention, provided is an optical distribution network (ODN), including: a splitting module, configured to split a first uplink optical signal transmitted by an optical network unit (ONU) connected to a branch port of an ODN, to obtain a plurality of second uplink optical signals; and an identification module, configured to superpose the second uplink optical signals having undergone signal delay and corresponding to the same branch port of the ODN, to obtain a superimposed uplink optical signal corresponding to the branch port of the ODN, thereby identifying different branch ports of the ODN according to signal changes corresponding to the superimposed uplink optical signals.

According to yet another embodiment of the present invention, further provided is a computer readable storage medium storing a computer program, wherein when the computer program is configured to run to execute the steps in any one of the described method embodiments.

According to yet another embodiment of the present invention, further provided is an electronic device, including a memory and a processor; the memory stores a computer program, and the processor is configured to run the computer program so as to execute the steps in any one of the described method embodiments.

**Brief Description of the Drawings**

Fig. 1 is a hardware structure block diagram of a computer terminal running an identification method for branch ports of the ODN according to an embodiment of the present invention;

Fig. 2 is a flowchart of the identification method for branch ports of the ODN according to an embodiment of the present invention;

Fig. 3 is a structural block diagram of the ODN according to an embodiment of the present invention;

Fig. 4 is a structural block diagram of the identification apparatus for branch ports of the ODN according to another embodiment of the present invention;

Fig. 5 is a flowchart of an identification method for branch ports of a passive optical network according to an embodiment of the present invention;

Fig. 6 is a schematic diagram of optical splitter-based multi-path transmission and superposition of uplink optical signals according to an embodiment of the present invention;

Fig. 7 is a schematic diagram of multipath-superposed branch ports with different optical splitting ratios according to an embodiment of the present invention;

Fig. 8 is a simulation diagram of signal changes based on different splitting ratios according to an embodiment of the present invention;

Fig. 9 is a schematic diagram of a multi-path branch port with different time delays according to an embodiment of the present invention;

Fig. 10 is a simulation diagram of a signal change when $\tau$ is 1.2T according to an embodiment of the present invention;

Fig. 11 is a simulation diagram of a signal change when $\tau$ is 1.4T according to an embodiment of the present invention;

Fig. 12 is a simulation diagram of a signal change when $\tau$ is 1.6T according to an embodiment of the present invention;

Fig. 13 is a simulation diagram of a signal change when $\tau$ is 1.8T according to an embodiment of the present invention;

Fig. 14 is a schematic diagram of a multi-path branch port including multiple stages of optical splitting according to an embodiment of the present invention;

Fig. 15 is a schematic diagram of grating device-based multi-path transmission and superposition of uplink optical signals according to an embodiment of the present invention;

Fig. 16 is a simulation diagram of a signal change when $R_L$ is 0.02 according to an embodiment of the present invention;

Fig. 17 is a simulation diagram of a signal change when $R_L$ is 0.06 according to an embodiment of the present invention;

Fig. 18 is a simulation diagram of a signal change when the length of a grating is 12 mm according to an embodiment of the present invention;

Fig. 19 is a simulation diagram of a signal change when the length of a grating is 16 mm according to an embodiment of the present invention;

Fig. 20 is a schematic diagram of a multi-path branch port including multiple stages of optical splitting according to another embodiment of the present invention;

Fig. 21 is a schematic diagram of a multi-path branch port including multiple stages of optical splitting according to still another embodiment of the present invention;

Fig. 22 is a schematic diagram of multi-path transmission based on a micro resonator ring structure and superposition of uplink optical signals according to an embodiment of the present invention.

**Detailed Description of the Embodiments**

The embodiments of the present invention are described in detail with reference to the accompanying drawings and in conjunction with the embodiments.

It should be noted that the terms "first", "second" etc. in the description, claims, and accompanying drawings of the present invention are used to distinguish similar objects, and are not necessarily used to describe a specific sequence or order.

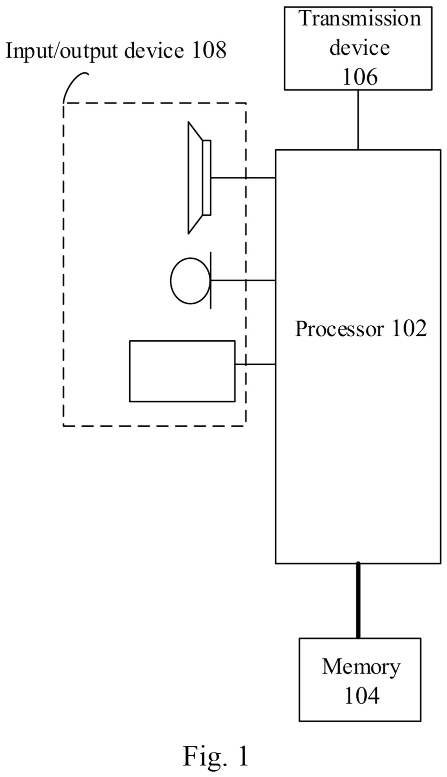

The method embodiment provided in the embodiment I of the present application may be executed in a mobile terminal, a computer terminal, or a similar computing device. Taking the computer terminal running as an example, Fig. 1 is a hardware structure block diagram of a computer terminal running an identification method for branch ports of an optical distribution network (ODN) according to an embodiment of the present invention. As shown in Fig. 1, the computer terminal may include one or more (only one is shown in Fig. 1) processors 102 (the processors 102 may include, but are not limited to, a microprocessor or a programmable logic device FPGA) and a memory 104 configured to store data, wherein the computer terminal can further include a transmission device 106 for a communication function and an input/output device 108. Those ordinarily skilled in the art can appreciate that the structure shown in Fig. 1 is for illustrative purposes only, but not limit the structure of the computer terminal. In one embodiment, the computer terminal may also include more or fewer components than those shown in Fig. 1, or have different configurations from that shown in Fig. 1.

The memory 104 may be configured to store a computer program, In one embodiment, a software program and a module of application software, such as the identification method for branch ports of the ODN in the embodiment of the present invention. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include a memory remotely located from the processor 102, and the remote memory may be connected to the computer terminal by a network. Examples of the network above includes, but is not limited to, an Internet, intranets, a local area network, a mobile communication network, and combinations thereof.

The transmission device 106 is configured to receive or transmit data over a network. Specific examples of the network may include a wireless network provided by a communication provider of the computer terminal. In one example, the transmission device 106 includes a network interface controller (NIC) which may be connected to other network devices by means of a base station, thereby being able to communicate with the Internet. In one example, the transmission device 106 may be a radio frequency (RF) module for communicating wirelessly with the Internet.

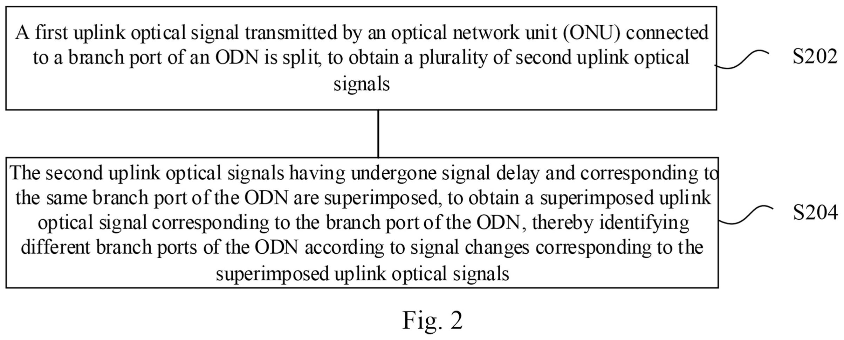

The present embodiment provides an identification method for branch ports of the ODN running on the described computer terminal. Fig. 2 is a flowchart of the identification method for branch ports of the ODN according to an embodiment of the present invention. As shown in Fig. 2, the flow includes the following steps:

At S202: a first uplink optical signal transmitted by an optical network unit (ONU) connected to a branch port of an ODN is split, to obtain a plurality of second uplink optical signals; and

At S204: the second uplink optical signals having undergone signal delay and corresponding to the same branch port of the ODN are superimposed, to obtain a superimposed uplink optical signal corresponding to the branch port of the ODN, thereby identifying different branch ports of the ODN according to signal changes corresponding to the superimposed uplink optical signals.

In S202 of the present embodiment, splitting a first uplink optical signal transmitted by an optical network unit (ONU) connected to a branch port of an ODN includes one of the following: at any one of the ODN branch ports, splitting the first uplink optical signal into two second uplink optical signals having a signal delay difference by an optical splitter or a directional coupler; at any one of the ODN branch ports, partially reflecting the first uplink optical signal by a plurality of grating structures, to obtain a second uplink optical signal that is transmitted directly and a second uplink optical signal that is transmitted after being reflected; at any one of the ODN branch ports, partially reflecting the first uplink optical signal by a plurality of reflection structures, to obtain a second uplink optical signal that is transmitted directly and a second uplink optical signal that is transmitted after being reflected; and at any one of the ODN branch ports, performing path separation on the first uplink optical signal by a micro-ring resonator, to form a second uplink optical signal at a through port and a second uplink optical signal at a drop port.

In one embodiment, the first uplink optical signal is split into a plurality of second uplink optical signals using a plurality of grating structures, reflection structures, or micro-ring resonators, that is, it is not limited to two second uplink optical signals, wherein there is a signal delay between the second uplink optical signals.

In one embodiment, after splitting the first uplink optical signal transmitted by the optical network unit connected to the branch port of the ODN, to obtain the plurality of second uplink optical signals, the method further includes: transmitting the plurality of second uplink optical signals by different transmission paths, and performing signal delay on the second uplink optical signals in the different transmission paths.

At S202 of the present embodiment, performing signal delay on the second uplink optical signals in the different transmission paths includes one of the following: by embedding optical waveguides with different lengths into the transmission paths, generating different degrees of signal delay for the second uplink optical signals transmitted in the different transmission paths; by adjusting a reflectivity of an end face of the grating structure or a length of the grating structure, generating different degrees of signal delay for the second uplink optical signals transmitted in the different transmission paths; by adjusting a reflectivity of the reflection structure, generating different degrees of signal delay for the second uplink optical signals transmitted in the different transmission paths; and by adjusting a radius or a length of a resonant cavity of the micro-ring resonator, generating different degrees of signal delay for the second uplink optical signals transmitted in the different transmission paths.

At S202 of the present embodiment, in cases that there are two stages of optical splitters, performing signal delay on the second uplink optical signals in the different transmission paths includes: setting a same splitting ratio for a second-stage optical splitter corresponding to a same first-stage optical splitter; setting a different splitting ratio for a second-stage optical splitter corresponding to a different first-stage optical splitter; and setting different signal delay values for ODN branch ports corresponding to the same first-stage optical splitter; so that the first uplink optical signals transmitted in the different transmission paths generate different degrees of signal delay.

At S202 of the present embodiment, in cases that there are two stages of optical splitters, performing signal delay on the second uplink optical signals in the different transmission paths includes: providing a first grating structure at an input port of the second-stage optical splitter; and providing a second grating structure at an output port of the second-stage optical splitter, so that the first uplink optical signals transmitted in the different transmission paths generate different degrees of signal delay, the reflectivity of the first grating structure being different from that of the second grating structure.

In one embodiment, the second-stage optical splitter corresponding to the same first-stage optical splitter corresponds to the same first grating structure; and each of the second stage optical splitters corresponds to a different second grating structure.

In one embodiment, in cases that there are two stages of optical splitters, performing signal delay on the second uplink optical signals in the different transmission paths includes: providing a multi-path delay and superposition module at a branch port of the first-stage optical splitter and a branch port of the second-stage optical splitter respectively, wherein a splitting ratio or reflectivity is set differently between the multi-path delay and superposition modules corresponding to the first-stage optical splitter, while a signal delay difference or optical path difference is set to be the same; or, the signal delay difference or optical path difference is set differently between the multi-path delay and superposition modules corresponding to the first-stage optical splitter, while the splitting ratio or reflectivity is set to be the same.

At S204 of the present embodiment, superposing the second uplink optical signals corresponding to the same ODN branch port includes one of the following: using the optical splitter or the directional coupler to combine the second uplink optical signals transmitted in the different transmission paths, so as to superpose the second uplink optical signals corresponding to the same ODN branch port; using the grating structure or the reflection structure to superpose the second uplink optical signal that is transmitted directly and the second uplink optical signal that is transmitted after being reflected; and superposing the second uplink optical signal at the through port and the second uplink optical signal at the drop port by multiplexing the micro-ring resonator.

In one embodiment, the signal change includes at least one of: a pilot tone modulation amplitude, a pilot tone modulation waveform, a received signal eye diagram, a pilot tone modulation eye diagram, and a delay of a pilot tone modulation signal relative to a data signal.

By means of the described steps, since the first uplink optical signal, after being split, experiences different degrees of signal delay due to transmission through different transmission paths, the superimposed uplink optical signal, which is obtained by combining the second uplink optical signals corresponding to the same ODN branch port, exhibits signal changes. Due to different signal delay differences between the first uplink optical signals, different superposed uplink optical signals correspond to different signal changes, so that an ODN can be identified according to different signal changes. Therefore, the problem that the connection relationship between the branch ports of the splitter in the ODN and the ONUs is unclear, making it impossible to determine the topological connection relationship of the ODN network can be solved, achieving an effect of visualizing the ODN.

From the description of the embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the present invention, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present invention.

The present embodiment further provides an optical distribution network (ODN), the ODN is used for implementing the embodiments and preferred embodiments above, and what has been described will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

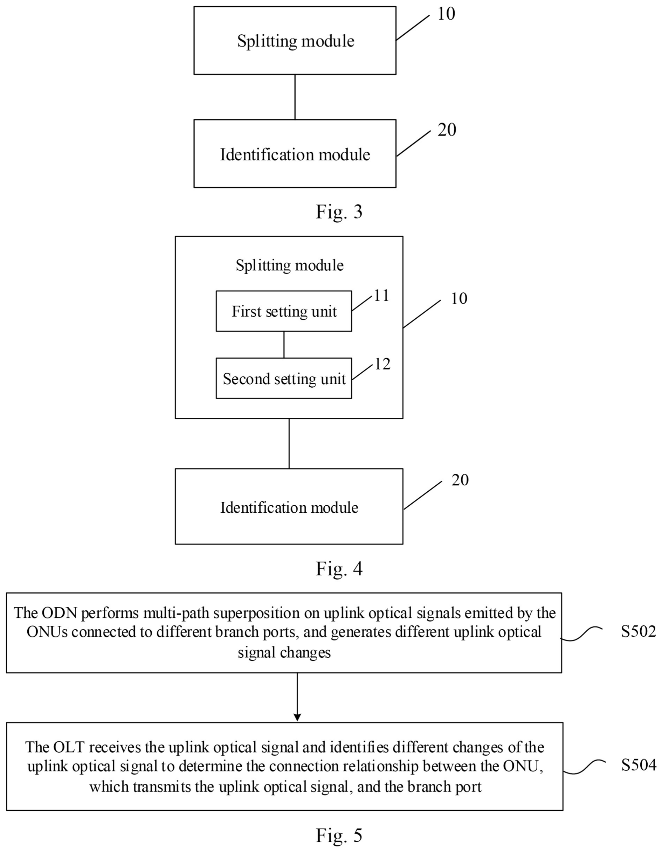

Fig. 3 is a structural block diagram of the ODN according to an embodiment of the present invention. As shown in Fig. 3, the ODN includes a splitting module 10 and an identification module 20.

The splitting module 10 is configured to split a first uplink optical signal transmitted by an optical network unit (ONU) connected to a branch port of an ODN, to obtain a plurality of second uplink optical signals; and

the identification module 20 is configured to superpose the second uplink optical signals having undergone signal delay and corresponding to the same branch port of the ODN, to obtain a superimposed uplink optical signal corresponding to the branch port of the ODN, thereby identifying different branch ports of the ODN according to signal changes corresponding to the superimposed uplink optical signals.

Fig. 4 is a structural block diagram of the identification apparatus for branch ports of the ODN according to another embodiment of the present invention. As shown in Fig. 4, in addition to including all modules shown in Fig. 3, in cases that there are two stages of optical splitters, the splitting module 10 further includes:

a first setting unit 11, configured to set a same splitting ratio for a second-stage optical splitter corresponding to a same first-stage optical splitter, set a different splitting ratio for a second-stage optical splitter corresponding to a different first-stage optical splitter, and set different signal delay values for ODN branch ports corresponding to the same first-stage optical splitter, so that the first uplink optical signals transmitted in the different transmission paths generate different degrees of signal delay; and

a second setting unit 12, configured to provide a first grating structure at an input port of the second-stage optical splitter; and provide a second grating structure at an output port of the second-stage optical splitter, so that the first uplink optical signals transmitted in the different transmission paths generate different degrees of signal delay, the reflectivity of the first grating structure being different from that of the second grating structure.

It should be noted that the modules above may be implemented by software or hardware, and the latter may be implemented in the following manner, but is not limited thereto. All the modules above are located in the same processor; or all the modules above are located in different processors in any arbitrary combination manner.

To facilitate understanding of the technical solutions provided in the present invention, hereinafter, it will be described in detail in combination with the embodiments of the specific scenario.

Embodiments of the present invention provide an identification method for a branch port of a passive optical network. Implementation of the method does not require any changes to existing ONU devices and optical modules, and does not require an additional detection light source at an OLT side. While keeping the passive characteristics, the ODN optical splitter may also identify branch ports of the ODN, and determine a connection relationship between the branch ports and the ONUs, so as to visualize the ODN. Fig. 5 is a flowchart of an identification method for branch ports of a passive optical network according to an embodiment of the present invention. As shown in Fig. 5, the method includes the following steps:

At S502: the ODN performs multi-path superposition on uplink optical signals emitted by the ONUs connected to different branch ports, and generates different uplink optical signal changes.

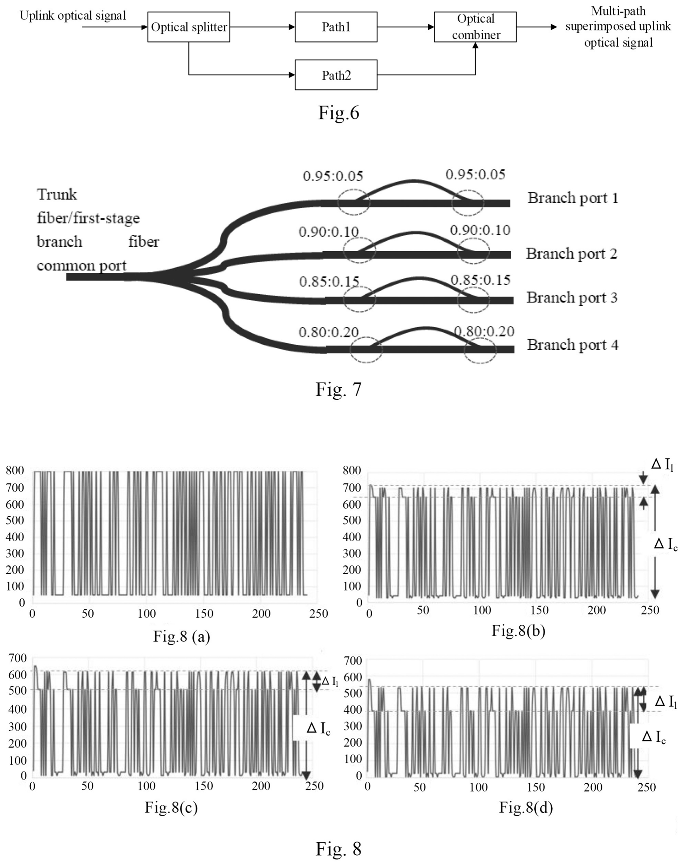

Fig. 6 is a schematic diagram of optical splitter-based multi-path transmission and superposition of uplink optical signals according to an embodiment of the present invention. As shown in Fig. 6, in any branch port, multi-path superposition refers to splitting an uplink optical signal to generate a plurality of transmission paths, and then performing combination and superposition on optical signals of the plurality of transmission paths, wherein each transmission path generates different optical signal delays for the uplink optical signals.

In one embodiment, splitting an uplink optical signal to generate a plurality of transmission paths includes, but is not limited to: splitting the first uplink optical signal into the plurality of second uplink optical signals by an optical splitter or a directional coupler; using two or more grating structures to partially reflect an uplink optical signal, so as to form a plurality of signals, such as direct transmitted light and light that is reflected and then transmitted; partially reflecting the uplink optical signal using two or more reflection structures (In one embodiment, plating a reflection film on an input/output end face of an optical splitter) to form a plurality of signals, such as direct transmitted light and light that is reflected and then transmitted; and using a device such as a micro-ring resonator to perform path separation on an uplink optical signal, so as to form a plurality of signals at a through port, a drop port, etc.

In one embodiment, the optical signal delay is caused by an optical path difference of a plurality of transmission paths, which includes, but is not limited to: an optical waveguide delay line, a phase delay device, a reflection optical path difference between gratings or a reflection optical path difference between reflectors, and a resonant cavity length of a micro-ring resonator.

In one embodiment, optical signal combination and superimposition is an opposite process of splitting an uplink optical signal, and includes, but is not limited to: combination by an optical splitter or a directional coupler, superposition by a grating or a reflector of light which is directly transmitted and light which is transmitted after being reflected, and multiplexing by a micro-ring resonator.

In one embodiment, the change in the uplink optical signal includes one or a combination of the following: an amplitude change or intensity change of the uplink optical signal corresponding to a "1" or "0" signal, a change in a pilot tone modulation amplitude, a change in a pilot tone modulation waveform, a change in a received signal eye diagram, a change in a pilot tone modulation eye diagram, a delay of a pilot tone modulation signal relative to a data signal, and a generation of a pilot tone modulation signal with the same frequency as the signal light for the uplink optical signal.

The difference in the change of the uplink optical signal includes, but is not limited to one or a combination of the following: a difference in an amplitude change or intensity change of the uplink optical signal corresponding to a "1" or "0" signal, a difference in a change in an uplink signal eye diagram, a difference in a phase delay of the uplink optical signal relative to the signal light when generating a pilot tone modulation signal at the same frequency as the signal light, a difference in a data delay, and a difference in an extinction ratio.

In one embodiment, when the uplink optical signal is changed using a plurality of feature combinations, the original ODN may be modified using the plurality of feature combinations, thereby reducing transmission costs caused by multi-path superposition; the consistency of the two stages of optical splitters or multiple stages of optical splitters may also be ensured by means of a combination of multiple features.

In one embodiment, the multi-path superposition may be implemented at any position of an ODN optical splitter or a branch fiber.

At S504: the OLT receives the uplink optical signal and identifies different changes of the uplink optical signal to determine the connection relationship between the ONU, which transmits the uplink optical signal, and the branch port.

The following is a method for identifying a branch port of a PON in a specific implementation scenario.

The specific implementation of the multi-path superposition method for an uplink optical signal is as shown in Fig. 6, the uplink optical signal is split into a path 1 and a path 2 by means of an optical splitter; different phase delays are generated for the split uplink optical signals by the path 1 and the path 2, and then are combined by an optical combiner to generate a multi-path superposed uplink optical signal.

In one embodiment, the optical splitter and the optical combiner can be implemented using optical splitting/-combining devices such as fiber-optic splitters, optical waveguide splitters and directional couplers. The optical signal delay of the path 1 and the path 2 may be implemented by two optical fibers or optical waveguides with different lengths, or a phase delay device may be embedded into one or two of the optical fibers or optical waveguides.

In one embodiment, the multiple delay and superposition processing positions may be located at any position of the branch ports or the branch fibers of the optical splitter.

Embodiment I

Different correlations between different branch ports and ONUs need to be distinguished, and different multi-path superposition changes need to be generated for the uplink optical signal. Fig. 7 is a schematic diagram of multipath-superposed branch ports with different optical splitting ratios according to an embodiment of the present invention. As shown in Fig. 7, optical splitters and optical combiners in different branch ports are set to have different splitting ratios, so as to generate different splitting ratios for uplink optical signals corresponding to different branch ports, wherein the splitting ratios of the optical splitters and the optical combiners in the same branch port are the same.

In one embodiment, taking a 1: 4 optical splitter as an example, the splitting ratio of the optical splitter to the optical combiner corresponding to the branch port 1 (i.e. the splitting ratio of the through port and the delay port) is 0.95:0.05; accordingly, for the branch port 2, the optical splitter and the optical combiner use a splitting ratio of 0.9:0.1; for the branch port 3, the optical splitter and the optical combiner use a splitting ratio of 0.85:0.15; and for branch port 4, the optical splitter and the optical combiner use a splitting ratio of 0.80:0.20.

The principle of each branch port changing the received uplink optical signal by means of multi-path superposition is as follows:

In any branch port, assuming that the splitting ratios of the optical splitter and the optical combiner are both $R$, an uplink optical signal inputted into the optical splitter is: $E_s = A_s(t)e^{j(w^s t + \varphi^s)}$, and the inputted uplink optical signal intensity is $I_s = A_s(t)^2$; and the optical path delay difference and the phase difference of the path 1 and the path 2 are respectively $\tau$ and $\Delta\varphi$. After being split by the optical splitter, the path 1 and the path 2 have different delays, and then are combined by the optical combiner, the obtained multi-path superposed uplink optical signal intensity $I_c$ is as shown in formula (1):

$$\mathrm{I}_c = \left[ \frac{R}{1+R} \cdot A_s(t) \cdot e^{-jw_s t} + \frac{1}{1+R} \cdot A_s(t-\tau) \cdot e^{-j(w_s t + \Delta\varphi)} \right] \left[ \frac{R}{1+R} \cdot A_s(t) \cdot e^{jw_s t} + \frac{1}{1+R} \cdot A_s(t-\tau) \cdot e^{j(w_s t + \Delta\varphi)} \right]$$

$$= \left( \frac{R}{1+R} \right)^2 A_s^2(t) + \left( \frac{1}{1+R} \right)^2 A_s^2(t-\tau) + \frac{2R\cos\Delta\varphi}{(1+R)^2} A_s(t) \cdot A_s(t-\tau) \tag{1}$$

Assuming that an optical signal delay difference $\tau$ introduced by the path 1 and the path 2 in Fig. 7 is 3T (wherein one period $T$ is a bit symbol in an uplink optical signal); the optical signal intensities $I_{s0}$ and $I_{s1}$ corresponding to the initially inputted uplink optical signals 1 and 0 are 800 uW and 50 uW, respectively, as shown in Fig. 8(a).

When the splitting ratio of the optical splitter and the optical combiner corresponding to each branch port is 0.95:0.05, 0.90:0.10, and 0.85:0.15 respectively, the obtained different multi-path superposed uplink optical signal intensity $I_c$ is shown in Fig. 8(b), Fig. 8(c), and Fig. 8(d).

It can be seen from Fig. 8(a) to Fig. 8(d) that different uplink optical signal changes are generated after multi-path superposition is performed using different splitting ratios. In one embodiment, the obtained multi-path superposed uplink optical signal intensity generates pilot tone modulation signals $\Delta I_1$ of different amplitudes, or different ratios $\Delta I_1/\Delta I_C$ of pilot tone modulation amplitude and the signal modulation amplitude.

In one embodiment, the change amplitude of the value of $R$ may be adjusted according to the splitting ratio, In one embodiment, when there are a plurality of branch ports, it may be adjusted to 0.98:0.02, 0.96:0.04,..., and so on. In addition, $R$ can also take values such as 49, 47, 45, and so on, and may be specifically adjusted according to the implementability of the optical splitter.

In one embodiment, the splitting ratio $R$ of an optical splitter and an optical combiner being equal is one embodiment of the present invention. However, in an actual implementation process, the splitting ratios $R$ of an optical splitter and an optical combiner corresponding to the same branch port may also be not equal, and in this way, different multi-path superposition changes may be generated for an uplink optical signal, thereby providing a more subtle difference. If the splitting ratio is large, different splitting ratio combinations of an optical splitter and an optical combiner may be further introduced, but this brings a larger challenge to the uplink optical signal receiver and the processing of the received data signal.

In one embodiment, the multi-path delay and superposition module may be integrated with the optical splitter into a single chip, or implemented as separate chips connected by optical fiber splicing or space optical coupling. The multi-path delay and superposition module is not limited to a PLC-type optical waveguide device, and may also be implemented by fused biconical tapering, etc.

Embodiment II

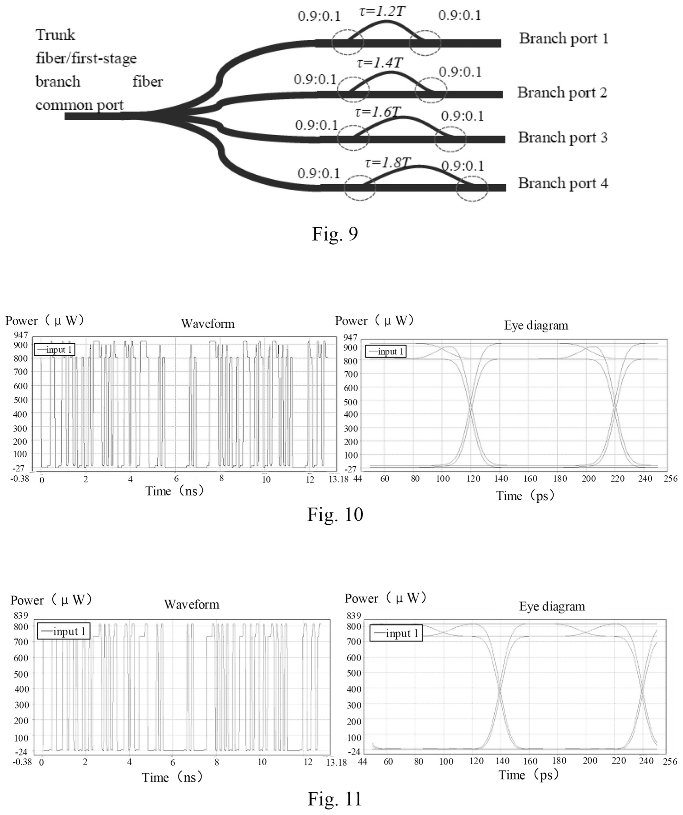

Fig. 9 is a schematic diagram of a multi-path branch port with different time delays according to an embodiment of the present invention. In the Embodiment I, if the number of branch fibers is large, a finer division needs to be made for the change of the splitting ratio, or the splitting ratio is further reduced to 0.5:0.5. The former imposes extremely high requirements on the signal processing module at the receiving end, while the latter introduces significant loss to the direct signal transmission port. In one embodiment, generating different multi-path superpositions for the uplink optical signal may be implemented by generating different time delays for the multiple paths. In one embodiment, as shown in Fig. 9, the multi-path delay differences $\tau$ of different branch ports are 1.2T, 1.4T, 1.6T, 1.8T and the like (wherein one period $T$ is a bit symbol in the uplink optical signal).

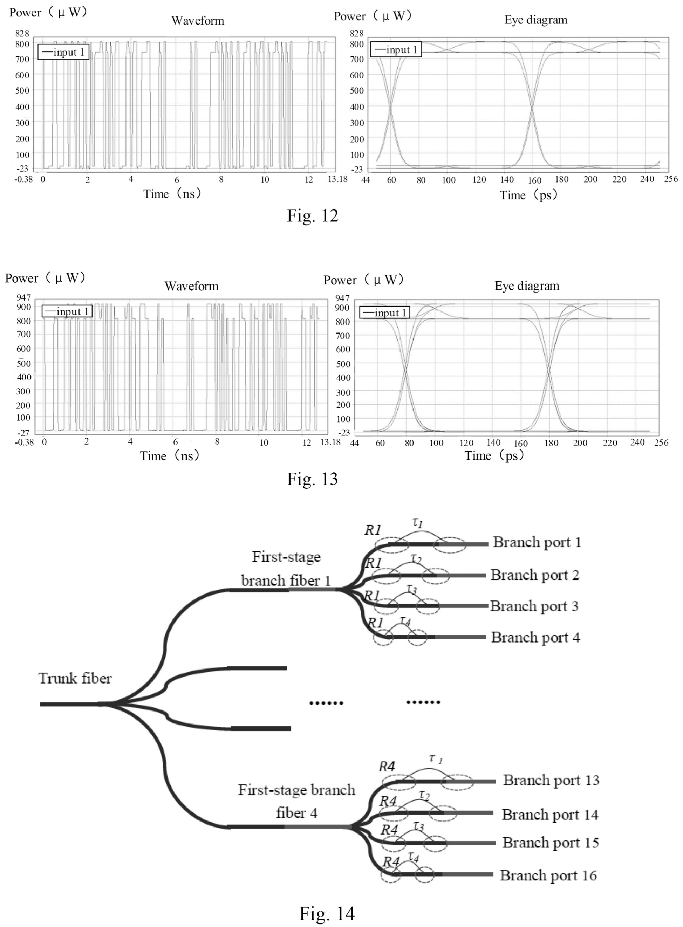

Figs. 10-13 are simulation diagrams of signal changes in a scenario where a split ratio R 0.9:0.1 is controlled to be constant while changing a time delay, wherein Fig. 10 is a simulation diagram when $\tau$ is 1.2 T, Fig. 11 is a simulation diagram when $\tau$ is 1.4 T, Fig. 12 is a simulation diagram when $\tau$ is 1.6 T, and Fig. 13 is a simulation diagram when $\tau$ is 1.8 T.

As can be seen from Fig. 10 to Fig. 13, when the multi-path delay differences $\tau$ of different branch ports are different, the difference between the pilot tone modulation waveform and the eye pattern of the multi-path delayed and superposed signal obtained by the receiving side is different. In one embodiment: the amplitude variation of the 1 stage in the pilot tone modulation signal differs for each bit, and the position difference between the crossing point of the pilot tone modulation eye diagram and the crossing point of the data signal eye diagram varies differently. Obviously, after extracting the change information from the signal of the receiving side, a specific branch port through which the received uplink optical signal passes may be deduced, so as to determine the connection relationship between the ONU, which transmits the uplink optical signal, and the branch port.

In one embodiment, the delay difference may not be an equally-spaced delay, the delay difference interval may also be an integer multiple of T or an integer multiple of nT, and the number of delay differences may be sequentially increased according to the number of branch ports. When the multi-path superposition method in which the delay difference interval may also be an integral multiple of T or an integral multiple of nT is used, no difference will be generated between the eye patterns of the pilot tone modulation signals of the received signals; however, the receiving side can obtain the difference by comparing and analyzing the decoded pilot tone modulation signal with the decoded data signal; and when the number of branch ports increases, only the buffer of the comparison data at the receiving side needs to be increased.

Embodiment III

In a scenario including multiple stages of optical splitting, in Embodiment and Embodiment II, if the splitting ratio needs to be adjusted, both the splitting ratio adjustments and delay difference adjustments need to be increased, which could introduce challenges in device implementation.

In one embodiment, the adjustment of the number of parameters may be reduced by combining Embodiment and Embodiment II. Fig. 14 is a schematic diagram of a multi-path branch port including multiple stages of optical splitting according to an embodiment of the present invention. As shown in Fig. 14, 1:4 one-stage optical splitting and 1:4 two-stage optical splitting are taken as examples,

in the two-stage splitting, the first two-stage 1:4 optical splitter takes a splitting ratio of R1 and delay differences of $\tau 1$, $\tau 2$, $\tau 3$, and $\tau 4$; the second two-stage 1:4 optical splitter takes a splitting ratio of R2 and delay differences of $\tau 1$, $\tau 2$, $\tau 3$, and $\tau 4$; the third two-stage 1:4 optical splitter takes a splitting ratio of R3 and delay differences of $\tau 1$, $\tau 2$, $\tau 3$, and $\tau 4$; and the fourth two-stage 1:4 optical splitter takes a splitting ratio of R3 and delay differences of $\tau 1$, $\tau 2$, $\tau 3$, and $\tau 4$.

In one embodiment, the one-stage splitting ratio and the two-stage splitting ratio are only exemplified by 1:4. In practical applications, splitting ratios such as 1:8, 1:16, or others can be used without limitation, with corresponding adjustments to the splitting ratio and delay difference as needed. By using the method of the present embodiment, different branch ports 1~16 can achieve different multi-path superposition signal changes, so as to determine the connection relationship between the ONU and the two-stage and one-stage branch fibers.

Embodiment IV

In any branch port, the uplink optical signal is split to generate a plurality of transmission paths, and a grating device may also be used. The grating device includes two or more grating structures. The grating structure partially reflects the uplink optical signal to form a plurality of paths of signals, such as direct transmitted light and light that is reflected and then transmitted. The uplink optical signal directly transmitted through the grating structure is formed by an uplink optical signal that is transmitted after being reflected by the grating for many times. An optical path between two grating structures can introduce an optical signal delay, that is, a signal delay difference introduced by multiple paths.

In one embodiment, the dimension of the multi-path delay and superposition module may be less than that in the foregoing embodiment, so that the device is more compact. In addition, the multi-path delay and superposition module may also be processed as a connector device by means of fiber brag grating and installed at the tail end of conventional splitters or branch fibers, without changing types of optical splitters and branch fibers of an existing network, thereby facilitating construction, operation, and maintenance.

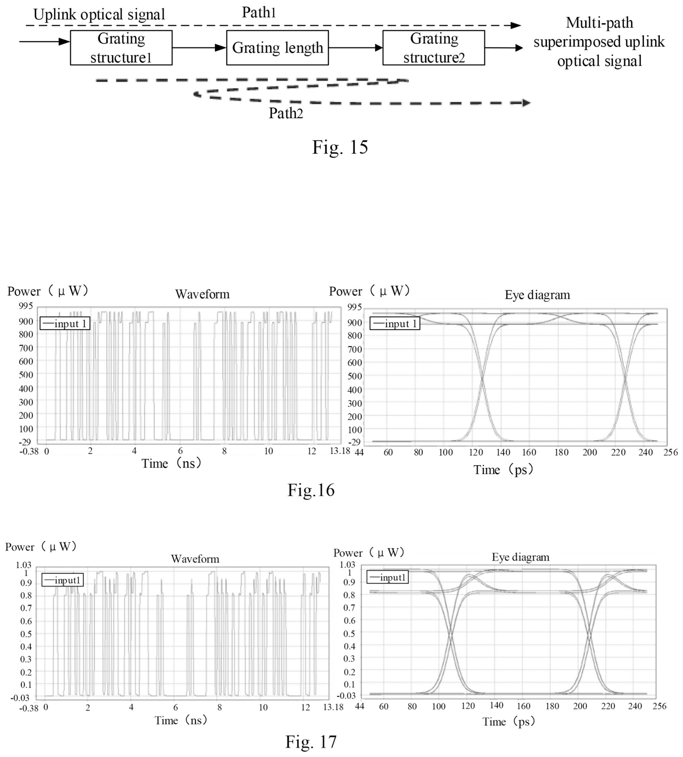

Fig. 15 is a schematic diagram of grating device-based multi-path transmission and superposition of uplink optical signals according to an embodiment of the present invention. As shown in Fig. 15, the grating device includes a grating structure 1 and a grating structure 2.

In one embodiment, the grating structure 1 and the grating structure 2 may be a left reflective end face and a right reflective end face of the grating, and different uplink optical signal multi-path delayed and superposed changes may be obtained by using different reflectivities $R_L$ and $R_R$ of the two reflective end faces. Figs. 16 and 17 are simulation diagrams of signal changes based on grating structures with different reflectivities according to an embodiment of the present invention.

In one embodiment, as shown in Figs. 16 and 17, the grating length d takes a fixed value, the reflectivity $R_R$=0.1 at the right end face of the grating remains unchanged, and the reflectivity $R_L$ at the left end face of the grating is adjusted to change from 0.02 to 0.06. It can be determined by comparing Figs. 16 and 17 that the amplitude of the pilot tone modulation of the uplink multi-path delayed and superposed signal becomes larger, and the extinction ratio of the pilot tone modulation eye pattern becomes larger, but the position of the cross point remains unchanged. In this way, the connection relationship between the ONU and the connected branch port can be obtained by parsing the difference in the change of the received uplink multi-path delayed and superposed signal.

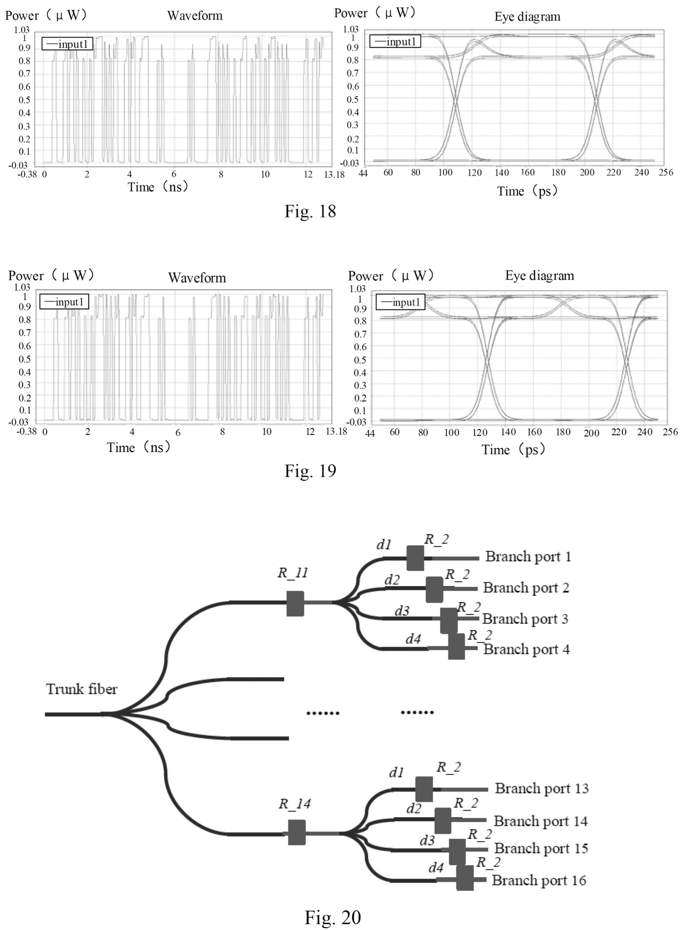

When the end-face reflectivity is fixed and the grating length d is different, different signal changes may also be generated for the uplink multi-path delayed and superposed optical signal, In one embodiment, the fixed grating right end-face reflectivity $R_R$=0.1 and the fixed grating left end-face reflectivity $R_L$=0.1, if the grating length d is adjusted to be 16 mm from 12 mm, simulation graphs in Figs. 18 and 19 can be obtained. By comparing Figs. 18 and 19, it can be found that both the pilot tone modulation waveform and the pilot tone modulation eye graph both generate differences.

In one embodiment, the issue of the rise in the splitting ratio can be addressed by designing differences in a combination of the parameters, the reflectivity $R_L$ and the length. In one embodiment, branch ports 1 to 8 take the parameters $R_L 1$, $R_R 1$, d1-d8; branch ports 9 to 16 take parameters $R_L 2$, $R_R 2$, d1-d8; branch ports 17 to 24 take parameters $R_L 3$, $R_R 3$, d1-d8; branch ports 17 to 32 take the parameters $R_L 4$, $R_R 4$, d1-d8.

Method Embodiment V

The grating structure 1 and the grating structure 2 in the grating device may also be two independent gratings or reflection structures which have different reflectivities: R_1 and R_2, and are respectively arranged at an input port and an output port of a two-stage optical splitter and are used in two-stage optical splitting. By adjusting the fiber length of the branch of the optical splitter, different delay differences may be obtained, and different changes of the uplink multi-path delayed and superposed signal may be obtained.

Fig. 20 is a schematic diagram of a multi-path branch port including multiple stages of optical splitting according to another embodiment of the present invention. As shown in Fig. 20, 1:4 one-stage optical splitting and 1:4 two-stage optical splitting are taken as examples,

The input ports of the two-stage optical splitter have different emissivities R_1, which are respectively R_11, R_12, R_13, and R_14. The optical path differences (i.e. the optical path differences between different transmission paths in each branch port) introduced by different branch fibers of the two-stage optical splitter are different, which are d1, d2, d3, and d4. The second grating structures/reflection structures at the output port of the two-stage optical splitter have the same reflectivity, which is R_2. In one embodiment, the two-stage optical splitters are identical, and by merely installing gratings or mirror structures with different reflectivities at the input ports, different branch ports can introduce different changes in the uplink multi-path delayed and superposed signal.

In one embodiment, when the optical splitter is a one-stage optical splitter, the first grating/reflection structure may be provided at an input port of the one-stage optical splitter, that is, at the entrance of a backbone fiber.

Embodiment VI

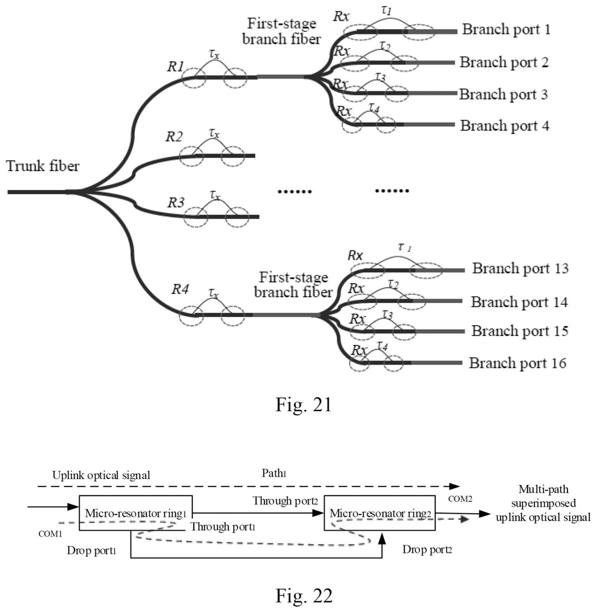

When the ODN is of a two-stage optical splitting architecture, the multi-path delay and superposition modules of the second-stage optical splitter may have different specifications. In one embodiment, the consistency of the two-stage optical splitters may be ensured by combining Embodiment and Embodiment II. As shown in Fig. 21, a multi-path delay and superposition module is provided at both the first-stage branch port and the second-stage branch port; the first-stage multi-path delay and superposition modules are set to have different splitting ratios or reflectivities and have the same signal delay difference or optical path difference; the second-stage multi-path delay and superposition modules are set to have different signal delay differences or optical path differences, and have the same splitting ratio or reflectivity.

Embodiment VII

In one embodiment, the multi-path delay and superposition module may be implemented by using a micro-resonant ring structure, which may reduce device insertion loss compared with a grating and reflective mirror structure. Fig. 22 is a schematic diagram of multi-path transmission based on a micro-resonator ring structure and superposition of uplink optical signals according to an embodiment of the present invention. As shown in Fig. 22, the multi-path delay and superposition module includes a micro-resonant ring 1 and a micro-resonant ring 2, wherein a Through port of the micro-resonant ring 1 is connected to a Through port of the micro-resonant ring 2; a Drop port of the micro-resonant ring 1 is connected to a Drop port of the micro-resonant ring 2; a common port COM of the micro-resonant ring 1 is an uplink signal input port; and a common port COM of the micro-resonant ring 2 is an output port of the uplink multi-path superposed signal. In the module, the optical signal of the path 1 is partially coupled at the COM1 port by the Through1 port of micro-resonator ring 1 and the Through2 port of micro-resonator ring 2, and then outputted at the COM2 port; the optical signal of path 2 is partially coupled and outputted from the Drop1 port through the resonance of micro-resonator ring 1 at the COM1 port, then is coupled by the Drop2 port of micro-resonator ring 2, and is outputted from the COM2 through the resonance of micro-resonator ring 2; the two signals are superposed at the COM2 port, and then a multi-path superposed uplink optical signal is output.

In one embodiment, a change in a coupling ratio of a coupling area of the micro-resonant ring 1 and the micro-resonant ring 2 may be adjusted to implement a change in an amplitude of the pilot tone modulation signal of the multi-path superposed uplink optical signal; and a delay difference of the multi-path signal may be changed by adjusting a radius/a cavity length of a micro-resonant cavity, so as to implement a difference between a pilot tone modulation waveform of the multi-path superposed uplink optical signal and a crossing point of an eye pattern. In this way, the connection relationship between the ONU, which transmits the current received uplink optical signal, and the specific branch port is identified.

In Embodiment ~ VII, different multi-path delay and superposition modules are configured to generate different multi-path superposed uplink optical signal changes, wherein the changes include, but are not limited to, a change in a pilot tone modulation amplitude, a change in a pilot tone modulation waveform, a change in a received signal eye pattern, and a change in a pilot tone modulation eye pattern. In specific implementation, by analyzing the changes in the received signal of the uplink optical signal sent by the current ONU, the connection relationship between the ONU sending the optical signal and the corresponding branch port can be deduced. Further, in the embodiment of the present invention, the uplink receiving direction further includes a multi-path superposed uplink optical signal parsing module and a branch port connection relationship determination module, wherein the multi-path superposed uplink optical signal parsing module parses a change in a pilot tone modulation amplitude, a change in a pilot tone modulation waveform, a change in a received signal eye pattern, a change in a pilot tone modulation eye pattern, etc., and sends change information to the branch port connection relationship determination module. The branch port connection relationship determination module determines the ODN branch port connected to the current ONU according to the received change information of the multi-path superposed uplink optical signal.

The embodiments of the present invention further provide a computer readable storage medium storing a computer program, wherein the computer program is configured to execute, when running, the steps in any one of the described method embodiments.

In one embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present invention further provide an electronic apparatus, including a memory and a processor; the memory stores a computer program, and the processor is configured to run the computer program, so as to execute the operations in any one of the method embodiments.

In one embodiment, the electronic device can further include a transmission device and an input/output device, wherein the transmission device is connected to the processor, and the input/output device is connected to the processor.

For specific examples In one embodiment, reference can be made to the examples described in the described embodiments and exemplary embodiments, and thus they will not be repeated again In one embodiment.

Obviously, those skilled in the art should understand that the modules or steps in some embodiments of the present invention can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present invention is not limited to any specific hardware and software combinations.

The content above only relates to preferred embodiments of the present invention, and is not intended to limit the present invention. For a person skilled in the art, the present invention may have various modifications and changes. Any modifications, equivalent replacements, improvements, etc. made within the principle of the present invention shall all fall within the scope of protection of the present invention.

**Claims**

1. An identification method for branch ports of an optical distribution network, ODN, comprising:

   splitting a first uplink optical signal transmitted by an optical network unit, ONU, connected to a branch port of an ODN, to obtain a plurality of second uplink optical signals; and
   superimposing the second uplink optical signals having undergone signal delay and corresponding to the same branch port of the ODN, to obtain a superimposed uplink optical signal corresponding to the branch port of the ODN, thereby identifying different branch ports of the ODN according to signal changes corresponding to the superimposed uplink optical signals.

2. The method according to claim 1, wherein splitting the first uplink optical signal transmitted by the optical network unit, ONU, connected to the branch port of the ODN, to obtain the plurality of second uplink optical signals comprises one of the following:

splitting the first uplink optical signal into the plurality of second uplink optical signals by an optical splitter or a directional coupler, at any one of the ODN branch ports; partially reflecting the first uplink optical signal by a plurality of grating structures, at any one of the ODN branch ports, to obtain a second uplink optical signal that is transmitted directly and a second uplink optical signal that is transmitted after being reflected;

partially reflecting the first uplink optical signal by a plurality of reflection structures, at any one of the ODN branch ports, to obtain a second uplink optical signal that is transmitted directly and a second uplink optical signal that is transmitted after being reflected; and

performing path separation on the first uplink optical signal by a micro-ring resonator, at any one of the ODN branch ports, to form a second uplink optical signal at a through port and a second uplink optical signal at a drop port.

3. The method according to claim 2, wherein after splitting the first uplink optical signal transmitted by the optical network unit connected to the branch port of the ODN, to obtain the plurality of second uplink optical signals, the method further comprises:

transmitting the plurality of second uplink optical signals by different transmission paths, and performing signal delay on the second uplink optical signals in the different transmission paths.

4. The method according to claim 3, wherein performing signal delay on the second uplink optical signals in the different transmission paths comprises one of the following:

generating different degrees of signal delay for the second uplink optical signals transmitted in the different transmission paths, by embedding optical waveguides with different lengths into the transmission paths;

generating different degrees of signal delay for the second uplink optical signals transmitted in the different transmission paths, by adjusting a reflectivity of an end face of the grating structure or a length of the grating structures;

generating different degrees of signal delay for the second uplink optical signals transmitted in the different transmission paths, by adjusting a reflectivity of the reflection structures; and

generating different degrees of signal delay for the second uplink optical signals transmitted in the different transmission paths, by adjusting a radius or a length of a resonant cavity of the micro-ring resonator.

5. The method according to claim 3, wherein in cases that there are two stages of optical splitters, performing signal delay on the second uplink optical signals in the different transmission paths comprises:

setting a same splitting ratio for a second-stage optical splitter corresponding to a same first-stage optical splitter; setting a different splitting ratio for a second-stage optical splitter corresponding to a different first-stage optical splitter; and setting different signal delay values for ODN branch ports corresponding to the same first-stage optical splitter, so that the first uplink optical signals transmitted in the different transmission paths generate different degrees of signal delay.

6. The method according to claim 3, wherein in cases that there are two stages of optical splitters, performing signal delay on the second uplink optical signals in the different transmission paths comprises:

providing a first grating structure at an input port of the second-stage optical splitter; and providing a second grating structure at an output port of the second-stage optical splitter, so that the first uplink optical signals transmitted in the different transmission paths generate different degrees of signal delay, the reflectivity of the first grating structure being different from that of the second grating structure.

7. The method according to claim 6, wherein the second-stage optical splitter corresponding to the same first-stage optical splitter corresponds to the same first grating structure; and each of the second stage optical splitters corresponds to a different second grating structure.

8. The method according to claim 3, wherein in cases that there are two stages of optical splitters, performing signal delay on the second uplink optical signals in the different transmission paths comprises:

providing a multi-path delay and superposition module at a branch port of the first-stage optical splitter and a branch port of the second-stage optical splitter respectively, wherein a splitting ratio or reflectivity is set differently between the multi-path delay and superposition modules corresponding to the first-stage optical splitter, while a signal delay difference or optical path difference is set to be the same; or, the signal delay difference or optical path difference is set differently between the multi-path delay and superposition modules corresponding to the first-stage optical splitter, while the splitting ratio or reflectivity is set to be the same.

9. The method according to claim 2, wherein superposing the second uplink optical signals corresponding to the same ODN branch port comprises one of the following:

combining the second uplink optical signals transmitted in the different transmission paths by the optical splitter or the directional coupler, so as to superpose the second uplink optical signals corresponding to the same ODN branch port;
superposing the second uplink optical signal that is transmitted directly and the second uplink optical signal that is transmitted after being reflected by the grating structures or the reflection structures; and
superposing the second uplink optical signal at the through port and the second uplink optical signal at the drop port by multiplexing the micro-ring resonator.

10. The method according to claim 1, wherein the signal change comprises at least one of: a pilot tone modulation amplitude, a pilot tone modulation waveform, a received signal eye diagram, a pilot tone modulation eye diagram, and a delay of a pilot tone modulation signal relative to a data signal.

11. An optical distribution network, ODN, comprising:

a splitting module, configured to split a first uplink optical signal transmitted by an optical network unit, ONU, connected to a branch port of an ODN, to obtain a plurality of second uplink optical signals; and
an identification module, configured to superpose the second uplink optical signals having undergone signal delay and corresponding to the same branch port of the ODN, to obtain a superimposed uplink optical signal corresponding to the branch port of the ODN, thereby identifying different branch ports of the ODN according to signal changes corresponding to the superimposed uplink optical signals.

12. The optical distribution network according to claim 11, wherein in cases that there are two stages of optical splitters, the splitting module comprises:
a first setting unit, configured to set a same splitting ratio for a second-stage optical splitter corresponding to a same first-stage optical splitter, set a different splitting ratio for a second-stage optical splitter corresponding to a different first-stage optical splitter, and set different signal delay values for ODN branch ports corresponding to the same first-stage optical splitter, so that the first uplink optical signals transmitted in the different transmission paths generate different degrees of signal delay.

13. The optical distribution network according to claim 11, wherein in cases that there are two stages of optical splitters, the splitting module comprises:
a second setting unit, configured to provide a first grating structure at an input port of the second-stage optical splitter; and provide a second grating structure at an output port of the second-stage optical splitter, so that the first uplink optical signals transmitted in the different transmission paths generate different degrees of signal delay, the reflectivity of the first grating structure being different from that of the second grating structure.

14. A computer readable storage medium, storing a computer program, when executed by a processor to implement the steps of the method according to any one of claims 1 to 10.

15. An electronic device, comprising a memory, a processor, and a computer program stored in the memory and run on the processor, when the processor executes the computer program to implement the steps of the method according to any one of claims 1 to 10.

Fig. 1

A first uplink optical signal transmitted by an optical network unit (ONU) connected to a branch port of an ODN is split, to obtain a plurality of second uplink optical signals — S202

The second uplink optical signals having undergone signal delay and corresponding to the same branch port of the ODN are superimposed, to obtain a superimposed uplink optical signal corresponding to the branch port of the ODN, thereby identifying different branch ports of the ODN according to signal changes corresponding to the superimposed uplink optical signals — S204

Fig. 2

EP 4 701 221 A1

Splitting module — 10

Identification module — 20

Fig. 3

Splitting module

First setting unit — 11

Second setting unit — 12

— 10

Identification module — 20

Fig. 4

The ODN performs multi-path superposition on uplink optical signals emitted by the ONUs connected to different branch ports, and generates different uplink optical signal changes — S502

The OLT receives the uplink optical signal and identifies different changes of the uplink optical signal to determine the connection relationship between the ONU, which transmits the uplink optical signal, and the branch port — S504

Fig. 5

Fig.6

Fig. 7

Fig.8 (a)

Fig.8(b)

Fig.8(c)

Fig.8(d)

Fig. 8

Fig. 9

Fig. 10

Fig. 11

Fig. 12

Fig. 13

Fig. 14

Uplink optical signal                    Path1                              Multi-path
                                                                        superimposed uplink
                                                                          optical signal

| Grating structure1 | → | Grating length | → | Grating structure2 |

Path2

Fig. 15

Power（μW）          Waveform          Power（μW）          Eye diagram

Fig.16

Power（μW）          Waveform          Power（μW）          Eye diagram

Fig. 17

Fig. 18

Fig. 19

Fig. 20

Fig. 21

Fig. 22

## INTERNATIONAL SEARCH REPORT

| International application No. |
|---|
| **PCT/CN2024/095009** |

**A.    CLASSIFICATION OF SUBJECT MATTER**

H04Q11/00(2006.01)i

According to International Patent Classification (IPC) or to both national classification and IPC

**B.    FIELDS SEARCHED**

Minimum documentation searched (classification system followed by classification symbols)

IPC:H04Q

Documentation searched other than minimum documentation to the extent that such documents are included in the fields searched

Electronic data base consulted during the international search (name of data base and, where practicable, search terms used)

CNTXT, CNABS, WOTXT, USTXT, EPTXT, VEN, IEEE, CNKI: 标签, 标识, 调顶, 叠加, 顶调制, 端口, 发射, 发送, 分光, 分光器, 分路, 分支, 干涉仪, 光分配网, 光网络单元, 光网络终端, 合并, 合路, 合为, 检测, 鉴别, 链路, 判断, 确定, 上行, 时延, 识别, 延迟, 延时, 支路, delay, ODN, ONT, ONU, port, optical distribution network, M-Z, combine, determine, detect, identify, branch

**C.    DOCUMENTS CONSIDERED TO BE RELEVANT**

| Category* | Citation of document, with indication, where appropriate, of the relevant passages | Relevant to claim No. |
|---|---|---|
| A | US 2014270772 A1 (TELLABS BEDFORD INC.) 18 September 2014 (2014-09-18) description, paragraphs [0011]-[0026] and [0047]-[0049], and figures 1 and 5 | 1-15 |
| A | JP 2020150316 A (KDDI RESEARCH INC.) 17 September 2020 (2020-09-17) entire document | 1-15 |
| A | CN 114285485 A (HANGZHOU DIANZI UNIVERSITY) 05 April 2022 (2022-04-05) entire document | 1-15 |
| A | CN 114944868 A (JIANGSU KEDA HENGXIN SEMITECH CO., LTD.) 26 August 2022 (2022-08-26) entire document | 1-15 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **31 July 2024** | **02 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095009**

| Patent document cited in search report | | | Publication date (day/month/year) | Patent family member(s) | | | Publication date (day/month/year) |
|---|---|---|---|---|---|---|---|
| US | 2014270772 | A1 | 18 September 2014 | US | 8953941 | B2 | 10 February 2015 |
| JP | 2020150316 | A | 17 September 2020 | JP | 6993369 | B2 | 13 January 2022 |
| CN | 114285485 | A | 05 April 2022 | CN | 114285485 | B | 23 May 2023 |
| CN | 114944868 | A | 26 August 2022 | CN | 114944868 | B | 28 June 2024 |

Form PCT/ISA/210 (patent family annex) (July 2022)

**EP 4 701 221 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310595912